# EUROPEAN PATENT SPECIFICATION

(11) **EP 0 546 649 B1**
(45) Date of publication and mention of the grant of the patent: **08.01.1997**
(21) Application number: 92250313.1
(22) Date of filing: 29.10.1992
(51) Int. Cl.: B09B 3/00, A62D 3/00, C02F 11/00, C09K 17/00

(54) **Method and system for rendering a hydrocarbon-contaminated Soil harmless**
Verfahren und System zum Entkontaminieren von Kohlenwasserstoffe enthaltendem Boden
Procédé et système pour rendre inoffensive sol contenant des hydrocarbures

(30) Priority: 09.12.1991 US 804310; 10.04.1992 US 866472
(43) Date of publication of application: 16.06.1993
(73) Proprietor: Ritter, Robert A., Vancouver V6E 1H3 (CA)
(72) Inventor: Ritter, Robert A., Vancouver V6E 1H3 (CA)
(74) Representative: Wablat, Wolfgang, Dr.Dr.

(56) References cited:
- EP-A- 0 047 233
- US-A- 4 018 679

## Description

This invention relates to a method and a system for rendering hydrocarbon-contaminated soil harmless.

For some time now, the art has been faced with the problem of rendering waste substances harmless, particularly at the present time with the emphasis on enhancing the environment. In particular, the art has been faced with the problem of the treatment of hydrocarbon-contaminated soils. Such a problem relates to soil which may have been contaminated through intentional or accidental spills of petroleum oils, hydrocarbon solvents or other, semi-volatile or non-volatile organic materials. Such contaminants may extend over large tracts of land and may directly or indirectly, e. g. through subsequent contamination of an underlying aquifer, constitute an extreme threat to wildlife, vegetation or human health. Conventional methods, e. g. land farming are not very suitable.

One example of waste substances to be rendered harmless are common by-products of plants in which chemicals are made or treated on an industrial scale, including aqueous sludges, which often contain a high proportion of relatively inert fine particulate materials, and a variety of reactive materials in sufficiently small concentrations as to make the reclamation thereof uneconomical. Often the available reactive compounds in the sludge solids include concentrations in the weight percent range of 0.5-5.0 of common materials, e. g., sulfate ions, calcium ions, aluminium ions, and iron ions or sources thereof. The water content of such sludges may vary considerably, and is typically in the range of 10 - 90 per cent by weight.

The disposition of such sludges has always been a problem. With the increasing awareness of the undesirability of discharging such waste materials into the environment and the resulting governmental regulation of such discharges, the need for a convenient, harmless, and economical way of disposing of such sludges or converting them into a useful product is becoming increasingly apparent. A further incentive is provided by the capital investment and land required for the disposition of such sludges by conventional means, which often include large settling ponds or storage piles.

Another disposal problem relates to oil well sumps. Oil well sumps are artificial pits used as dump sites for all kinds of liquid and viscous wastes. The physical consistency of the sump varies according to the random materials dumped. Typically, however, in the absence of a water layer, the consistency is pasty. Inasmuch as sumps create traps for wild fowl, there is an increasing demand for elimination of sumps, especially those not being commercially used. In addition, they are unsightly. The traditional treatment has been to dump and mix dirt into the sump and thereby soak up sufficient of the oil until the dirt-sump material can be moved by conventional equipment. The mixture is then spread to dry. This treatment has not been acceptable because the mixture bleeds oil and chemicals. Over the months and years this dirt-sump mixture oozes oil and becomes almost as objectionable as the original oil sump. This unsatisfactory type of treatment has called for an improved solution to the ecological problem of sump elimination.

The increasing use of hydrophobic substances, e. g. oils and oily substances, as well as macromolecular substances especially, has created new problems which arise mainly out of the handling of these substances. Particularly, the use of old oil, heating oils, lubricating oils and diesel fuels often leads, either intentionally or through negligence, and often due to emergency situations, to dangerous contamination of the environment.

There are a number of methods for rendering such oils or oily substances which, in a single phase or in multiple phase systems, entail an endangerment of the environment harmless. For example, oil can be chemically reacted by being burned, for example, or biologically degraded. The combustion method used frequently in combatting oil damage results in considerable air pollution if the burning is performed in the open rather than in expensive combustion apparatus.

The use of adsorbents solves such problem only when the oil can be fixed with them in such a manner that it is chemically unaltered but is encapsulated or otherwise isolated or is accessible to biological degradation and no longer constitutes any danger to the environment. With the known adsorptive agents, e. g. active charcoal, kieselguhr or bentonite, waste oil, for example, can be adsorptively bound only with difficulty. Large amounts of oil may cement the adsorptive agent, especially in the case of high-viscosity oils, making further processing difficult.

It has furthermore been proposed in various ways to treat porous mineral substances with hydrophobic substances for the purpose of improving their adsorptive characteristics. In this manner hydrophobic waste substances can be preferentially bound, while the water is no longer primarily absorbed. In such adsorptive agents, such as hydrophobized pearlite, however, the absorptive capacity is greatly reduced, since the mineral starting material is partially sealed by surface treatment with hydrophobizing substances, so that the inner cavities are no longer accessible.

It is particularly important that the substances which are adsorptively bound by the known processes are so fixed on the adsorptive agent that they no longer constitute any danger to the environment.

In addition to the general, mainly unsatisfactory procedures to solve the problems of disposal of such wastes discussed above, the patent literature has purported to provide solutions to these problems. The following patents teach purported solutions to the above-described problems by procedures including the addition of specified reagents, e. g., alkali metal oxides, thereto: U.S. Patent No. 3,720,609, patented March 13, 1973, by C.L. Smith et al; U.S. Patent No. 4,018,679, patented April 19, 1977, by F. Boelsing; and U.S. Patent No. 4,028,240, patented June 7, 1977, by F Marchak, Jr.

In particular, in the patent to Boelsing described above, the composition used was preferably prepared by blending lime with a solid fatty acid (in particular, a commercial grade of stearic acid commonly called stearin) by slowly adding the acid to coarse lime as it was subjected to the process of fine-grinding. The purpose of this operation was to render the lime hydrophobic, thereby delaying its hydration reaction with water and permitting it to be intimately mixed with contaminated soil by mechanical means. Subsequent hydration was then to result in an extremely fine and uniform dispersion of the contaminants, hydrated lime and soil. In practice, however, the purpose of that invention was not always achieved to its optimum.

The above procedures were unsatisfactory for solving the problems of disposal of wastes and particularly to reclaiming hydrocarbon-contaminated soil. Thus the prior art did not provide a novel method using a hydrophobizing agent which could effectively inhibit lime hydration until the lime-water mixture was mechanically blended through vigorous stirring, then allowed to remain essentially undisturbed at which time reaction occurs at a high rate. Nor could the prior art provide a novel method for treating hydrocarbon-contaminated soils in a manner which would result in the destruction of the hydrocarbon and the fixation and stabilization of all noxious contaminants.

The present invention solves the problem by providing a method for rendering harmless a hydrocarbon-contaminated soil by chemical hydrolysis and/or oxidation of said hydrocarbons on said hydrocarbon-contaminated soil, said method comprising
(I) providing a conditioned lime comprising
   A) finely-ground lime from about minus 10 mesh to sub-micro size on which is uniformly-coated on the surface thereof;
   B) a hydrophobizing or conditioning agent comprising a clear readily-atomizable blend which is liquid at room temperature of
      a) a mixture of liquid fatty acids having from 6 to 12 carbon atoms, and
      b) a mixture of glycerides of fatty acids having from 8 to 18 carbon atoms; where the amount of B) is sufficient fully uniformly to coat the finely-ground lime.
(II) intimately blending said conditioned lime in a ratio of from about 1:6 to about 1:1 with said hydrocarbon-contaminated soil, under conditions of high shear, the degree of blending providing a degree of dispersion at least near microscopic level in an apparatus capable of imparting sufficient shear and mixing action;
(III) conveying a charge of said blended conditioned lime/soil to an enclosed reaction vessel and carrying out hydration of said lime in said blended conditioned lime/soil charge, whereby said blended lime/soil charge being retained in said reaction vessel for a time of about 10 to about 45 minutes;
(IV) retaining the heat of said hydration reaction within said vessel, whereby hyrolysis of said fatty acid conditioner and/or hydrocarbon contaminants in the soil is initiated;
(V) substantially simultaneously introducing air or oxygen-enriched air into said reaction vessel together with steam and/or water wherein the direction of flow of said introduced air is co-current to the direction of flow of said solid charge through said reaction vessel thereby to effect a flameless intermediate-temperature oxidation of said hydrocarbons or of their hydrolysed degradation products;
(VI) discharging decontaminated soil product from said reaction vessel by passing said soil product, in dry, dusty, hydrophobic form through a treating zone where it is sprayed with a surfactant, i. e. commercial or industrial soaps or detergents at a concentration ranging from 30 % to 80 % by weight;
(VII) passing said surfactant-treated solid to a blender or a pug mill, where it is mixed with sufficient water in an amount ranging from 5 % to 25 % based on the quantity of treated solid, thereby to provide a substantially dust-free product.

In a preferred embodiment of the invention in said conditioned lime used in step (I) thereof said hydrophobizing or conditioning agent comprises a liquid blend of
a) a mixture of said liquide fatty acids comprising a preponderant amount of caprylic acid and capric acid, and
b) a mixture of glycerides of fatty acids comprised in coconut oil, babassu oil or palm kernel oil.

The hydrophobizing or conditioning agent can comprise a liquid blend of
a) a mixture of said liquid fatty acids comprising caproic acid, caprylic acid, capric acid, and lauric acid, and
b) coconut oil, the composition of which comprises the glyceride of lauric acid, with appreciable amounts of the glycerides of capric, myristic, palmitic, and oleic acids.

In a more preferred embodiment the hydrophobizing or conditioning agent comprises a liquid blend of
a) a mixture of said liquid fatty acids comprising 1 % caproic acid, 55 % caprylic acid, 42 % capric acid, and 2 % lauric acid and
b) coconut oil, the general composition of fatty acids therein comprising 8.0 % caprylic acid, 7.0 % capric acid, 48.0 % lauric acid, 17.5 % myristic acid, 8.2 % palmitic acid, 2.0 % stearic acid, 6.0 % oleic acid, and 2.5 % linoleic acid.

In a further embodiment the hydrophobizing or conditioning agent comprises a liquid blend of
a) a mixture of said liquid fatty acids
b) coconut oil , the composition of fatty acids therein comprising 47 % lauric acid, 19 % myristic acid, 9 % palmitic acid, 7 % oleic acid, <3 % stearic acid.

A further composition the hydrophobizing or conditioning agent comprises a liquid blend of
a) a mixture of said liquid fatty acids and
b) babassu oil, the composition of the acids of which comprises capylic acid, capric acid, lauric acid, myristic acid, palmitic acid, and oleic acid.

In another composition the hydrophobizing or conditioning agent comprises a liquid blend of
a) said mixture of said liquid fatty acids and
b) palm kernel oil, the composition of the acids of which comprises caprylic acid, capric acid, lauric acid, myristic acid, palmitic acid, stearic acid, oleic acid, and linoleic acid.

Preferably, the ratio of a) to b) by weight is 90:10 to 65:35, e. g. 73:27.

Preferably the amount of said hydrophobizing or conditioning agent is about 0.5 to 2.5 %, e. g., 1 % by weight of the composition.

Preferably, the hydrocarbon-contaminated soil has a maximum grain size less than 5 cm.

In a preferred embodiment of the invention the hydrocarbon-contaminated soil is physically-preconditioned moist.

The charge of the blended conditioned lime/soil is conveyed to an enclosed reaction vessel and the hydration of the lime is carried out. The enclosed reaction vessel may be subjected to batchwise feeding of the blended lime/soil charge. In another embodiment of the invention the enclosed reaction vessel is subjected to continuous feeding of said blended lime/soil charge, whereby said blended lime/soil charge moves continuously slowly through the reaction vessel.

Preferably, in step (IV) substantially simultaneously air or oxygen-enriched air is introduced into said reaction vessel together with steam and/or water wherein the direction of flow of said introduced air is from the point of introduction into the reaction vessel to the point of discharge from the reaction vessel thereby to effect a flameless intermediate-temperature oxidation of said hydrocarbons or of their hydrolysed degradation products.

The steam and/or water is introduced in an amount required to initiate, sustain and complete the hydrolysis reaction.

In step (V) decontaminated soil product is discharged from said reaction vessel by passing said soil product, in dry, dusty, hydrophobic form through a treating zone where it is sprayed with a surfactant, i. e. an aqueous solution of sodium hydroxide wherein the concentration of said sodium hydroxide is from 5 % to 10 % by weight.

The invention also concerns a system for rendering harmless a hydrocarbon-contaminated soil by chemical hydrolysis and/or oxidation of said hydrocarbons in said hydrocarbon-contaminated soil, comprising
(I) means (12) for finely-dividing said hydrocarbon-contaminated soil;
(II) a storage hopper (16);
(III) means (15) for feeding said finely-divided, hydrocarbon-contaminated soil to said storage hopper (16);
(IV) a blender (20); for blending under conditions of high shear, the degree of blending providing a degree of dispersion at least near microscopic level;
(V) means (18) for feeding said finely-divided, hydrocarbon-contaminated soil from said storage hopper (16) to said blender (20);
(VI) a storage vessel (21) containing conditioned lime provided according to step (I) claims 1 to 9;
(VII) means (23) for feeding said conditioned lime from said storage vessel (22) containing conditioned lime to said blender (20);
(VIII) an enclosed inclined reaction vessel (48), said reaction vessel (48) including a lower inlet, a bottom air-admitting inlet (30), an upper discharge means (31), and an upper surfactant admitting inlet (32) at said discharge;
(IX) discharge means (28) from said blender (20);
(X) a treating/blending vessel (33) having means for moving a solid charge from an intake end to a discharge end and having an upper water inlet line (34);
(XI) discharge means from said enclosed, inclined reaction vessel (31 for feeding a finely divided decontaminated solid charge directly to the intake of said treating/blending vessel (33) through a spray of surfactant, and
(XII) discharge means from said treating/blending vessel (33) for discharging moistened decontaminated soil from said treating/blending vessel (33) directly to said central intake (37) of said discharge tower (38). In a preferred embodiment the system comprises
(I) a jaw crusher or a roll crusher for finely-dividing said hydrocarbon contaminated soil;
(V) a screw conveyor within said storage hopper and an upwardly inclined belt conveyor leading from said storage hopper for feeding finely-divided, hydrocarbon contaminated soil from said storage hopper to said blender;
(VIII) an enclosed inclined reaction vessel, said reaction vessel including a lower inlet, a bottom air-admitting line, an upper discharge means in form of an inclined screw conveyor, within said reaction vessel for moving a solid material charge from said inlet to said discharge, and an upper surfactant admitting line at said discharge;
(IX) discharge means from said blender in form of a rotating blade blender/screw conveyor, for feeding a charge of blended conditioned lime/soil directly to said reaction vessel;
(X) a treating/blending vessel in form of a pug mill including a rotating blade blender/screw conveyor, having means for moving a solid charge from an intake end to a discharge end and having an upper water inlet line, and
(XII) discharge means from said treating/blending vessel for discharging moistened decontaminated soil from said treating/blending vessel directly to said central intake of said discharge tower wherein said discharge tower includes a fan for discharge of excess air to an emissions cleanup system and to maintain a negative pressure therein.

The hydrophobizing agent which is used in the inventive method comprises a liquid blend of certain liquid saturated fatty acids and certain glycerides of fatty acids. The resulting blend is a liquid at room temperature, thereby allowing it to be very easily and uniformly combined with the fine-ground lime. This procedure is accomplished with the aid of a spray nozzle which introduces the hydrophobizing agent into a rising air stream carrying the fine lime particles.

The amount of the hydrophobizing composition is selected to be sufficient fully to coat the finely divided lime particles. In practice therefore, this would range from 0.5 % to 2.5 % by weight, with the optimum amount being 1.0 %. The size of the finely divided lime is generally within the range of 3.5 mesh/lineal cm with 2 mm sieve openings to sub-micron sizes, preferably 40 mesh/lineal cm with 0.15 cm with 0.15 mm sieve openings to sub-micron sizes.

The pressure gradient across the spray nozzles should be 520 to 1560 mmHg. The velocity of upward flow of air is within the range of 910 to 1830 m/min.

In another feature, preconditioned moist contaminated soil has a maximum grain size of less than approximately 5 cm under conditions of high shear. The conditions of high shear should be similar to those obtained with the aid of a concrete mixer, e. g. the one known by the trade-mark NIKKO MIXER, a product of Nikko Co., Ltd. in Tokyo, Japan. The degree of dispersion must be at least near microscopic level. A charge of the blended lime/soil blend is conveyed to an enclosed reaction vessel and hydration of the lime is carried out. The heat of the hydration reaction is retained within the vessel, whereby hydrolysis of the fatty acid conditioner and/or hydrocarbon contaminants in the soil is initiated. Substantially simultaneously air or oxygen-enriched air is introduced into the reaction vessel together with water in an amount required to satisfy the stoichiometry of the hydrolysis reaction, and/or steam additionally to maintain the temperature of the reacting mixture, thereby to effect a flameless, intermediate-temperature oxidation of the hydrocarbon or the hydrolyzed degradation products of the hydrocarbon. Decontaminated soil product is discharged from the reaction vessel by passing the soil product, in dry, dusty hydrophobic form, through a treating zone where it is sprayed with a surfactant. The surfactant-treated solid is passed to a blender where it is mixed with sufficient water, ranging from 5 % to 25 % based on the quantity of treated solid, to provide a substantially dust-free product.

In another feature of the invention, the intimate blending may be provided by an apparatus capable of imparting sufficient shear and mixing action.

In one alternative feature of the invention, the reaction vessel may be subjected to continuous feeding of the blended conditioned lime/soil charge, whereby the blended conditioned lime/soil charge moves slowly through the reaction vessel. In another alternative feature of the invention, the reaction vessel may be subjected to batchwise feeding of the blended conditioned lime/soil charge, the blended conditioned lime/soil charge being retained in the reaction vessel for a predetermined period of time. In still another feature of the invention, the direction of flow of the introduced air may be co-current to the direction of flow of the blended conditioned lime/soil charge through the reaction vessel.

In yet a further feature of the invention, the surfactant comprises an aqueous solution of sodium hydroxide.

In a still further feature of the present invention, the blender comprises a pug mill.

In another feature of the present invention, the means for finely dividing hydrocarbon-contaminated soil is a jaw crusher or a roll crusher.

In another feature of the present invention, the means for feeding the finely divided hydrocarbon-contaminated soil from the storage hopper to the blender comprises a screw conveyor on the storage hopper and an upwardly inclined belt conveyor.

In another feature of the present invention, the discharge means from the blender comprises a rotating blade blender/screw conveyor.

In another feature of the present invention, the upper discharge means within the reaction vessel comprises an inclined screw conveyor.

In another feature of the present invention, the treating/blending vessel is a pug mill including a rotating blade blender/screw conveyor.

In another feature of the present invention, the discharge tower includes a fan for discharge of excess air therefrom.

The novel method and system provided for rendering harmless a hydrocarbon-contaminated soil is through effective chemical hydrolysis and/or oxidation of the hydrocarbon contaminants. In the first step of the procedure, lime (CaO) is conditioned with a suitable fatty acid activator. An appropriate quantity of the conditioned lime, ranging, based on the mass of soil, from about 15 % to about 100 % as dictated by the quantitiy of moisture in the feed, the nature of the soil and the type and quantity of the hydrocarbons present and determined through laboratory testing, is intimately blended with physically-preconditioned, moist, hydrocarbon-contaminated soil, which may or may not be further contaminated with noxious heavy metals. While a wide variety of devices capable of imparting the requisite shear and mixing action to the ingredients are commercially available, it is imperative that the degree of dispersion achieved be at the near microscopic level. This provides a blended soil charge.

The blend is, then, transferred to a reaction vessel in either continuous or batchwise fashion. If it is fed in a continuous fashion, the blended soil charge moves slowly through the reactor; if it is fed batchwise, the blended soil charge is retained for a predetermined period of time which may range from 10 minutes to 45 minutes and is adequate for completion of all hydration, hydrolysis and oxidation reactions. In either procedure, the reactor design is such that the heat generated during the hydrolysis of the lime in accordance with the reaction: ${\text{CaO + H}}_{\text{2}} {\text{O → Ca(OH)}}_{\text{2}}$is contained within the blended soil charge, thereby causing the temperature to rise to a level at which hydrolysis of the activator and, possibly certain of the hydrocarbon contaminants, is initiated.

Air, or oxygen enriched air, combined with water and/or steam where required by the chemical processes, is also introduced to the reactor to effect a flameless, intermediate temperature oxidation of the original hydrocarbons or the hydrolyzed degradation products of such hydrocarbons. The air or oxygen enriched air flow rate must be sufficiently high to provide an excess of 50 % to 100 % of stoichiometric oxygen requirements of the oxidation reactions while being limited to a level which will minimize the heat removal from the reaction mixture. These conflicting requirements may be accomodated through adjustments in the quantity of steam supplied to the reactor and the degree of oxygen enrichment of the air. The oxidation reactions may be represented generically as: ${\text{C}}_{\text{x}} {\text{H}}_{\text{y}} {\text{O}}_{\text{z}} {\text{+ O}}_{\text{2}} {\text{→ CO}}_{\text{2}} {\text{+ H}}_{\text{2}} \text{O}$In the continous method embodiment, the direction of flow of the air and the solid charge in the reactor is co-current. This ensures that any vaporized hydrocarbons, or incompletely hydrolyzed/oxidized hydrocarbon degradation products, are carried from the region of high concentration obtaining near the blended feed influent port to a region of low concentration and higher temperature nearer the exit, thereby providing an enhanced opportunity for further reaction.

The decontaminated soil product, which is normally very dry, dusty and extremely hydrophobic, leaves the reactor and passes through a spray of surfactant en route to another blender (e. g. a conventional pug mill) where it is mixed with a sufficient quantity of water to permit dust-free transfer to the final disposal site and/or compaction into a dense, stable monolith which, upon curing, provides virtually permanent encapsulation of any inorganic or surviving, trace organic residues.

The surfactant or wetting agent may be any of a number of commercially available long chain organic molecules, e. g. industrial or domestic soaps and detergents. However, it is preferable that this agent be a solution of approximately 5 % sodium hydroxide in water which is sprayed onto the dry reactor effluent in sufficient volume to ensure the desired water-wetting and compaction qualities of the final product from the process. The actual quantity will be determined by the nature of the soil, the quantity of lime employed, etc. and will range from 1 % to 10 % of the weight of the process product.

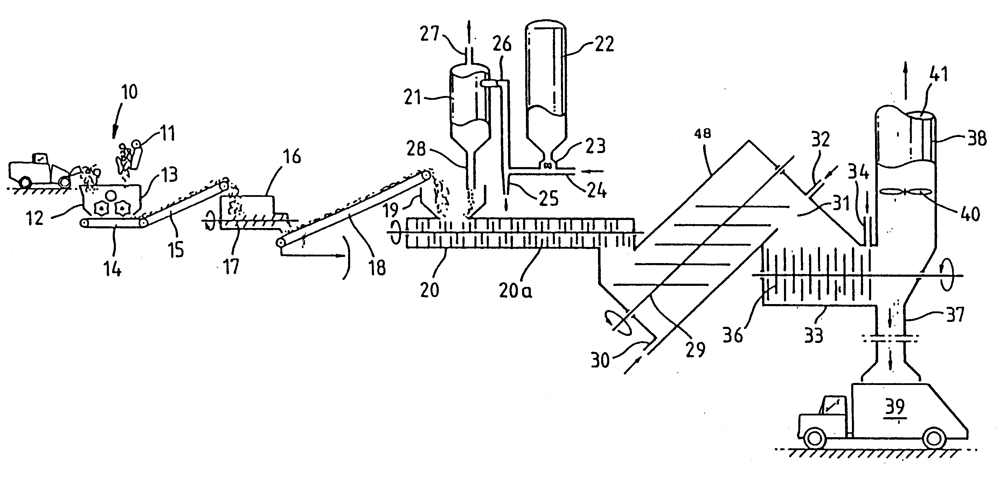

In the accompanying drawing, the single Figure is a schematic process flowsheet of the method and system of one embodiment of this invention.

The contaminated soil is removed from the area of contaminants and is fed, by a front-loader 10 either to a jaw crusher 11 or a roll crusher 12 and then to a hopper 13 provided with a conveyor system 14. Conveyor system 14 feeds an inclined ramp portion 15 leading to a storage hopper 16 provided with a feed rate control screw soil feeder 17, driven by means (not shown) in the direction shown by the arrow. Screw soil feeder 17 feeds soil to a second weigh-type conveyor system 18 where the soil is fed through a blender hopper 19 to a blender 20 provided with suitable means 20a for blending.

The lime is activated in the manner previously described in a lime-conditioning apparatus 21. Lime is stored in a lime storage vessel 22 where it is fed from a rotary valve 23 at the bottom of the lime storage vessel 22, and is carried by air, supplied through line 24, mixed with conditioned fatty acid composition (as previously described in Example 1) in line 25 to combined inlet line 26 to provide conditioned lime, held in conditioned lime storage and feed apparatus 21. Air is exhausted through vent 27. The conditioned lime is discharged via outlet 28 through the blender hopper 19 to the blender 20, the blended conditioned lime/soil charge is fed to an inclined reactor 48 provided with an upwardly feeding screw conveyor 29 rotated by motor means (not shown) in the direction shown. Oxidizing air together with water and/or steam as determined by the stoichiometry and thermal requirements of the chemical reactions is fed co-currently to the flow of the charge through air inlet 30 to the inclined reactor 48.

At the exit 31 from the inclined reactor 48, the decontaminated soil is sprayed with a suitable wetting agent as previously described through spray nozzle 32 and is fed to a pug mill 33. At the pug mill 33, the decontaminated soil is wetted with water through inlet 34, and is discharged by horizontal screw conveyor 36, rotated by motor means (not shown) in the direction shown to the outlet 37 of a discharge tower 38 to a suitable truck 39.

The discharge tower 38 includes an internal fan 40 which forces air outwardly to 41 to a cleanup zone (not shown) and maintains a slight negative pressure therein of approximately 1 cm to 3 cm water vacuum to minimize fugitive emissions.

The decontaminated soil may be fed to a compaction zone (not shown) and/or to landfill.

### Example 1 - Preparation of the Hydrophobizing Agent

Various blends of INDUSTRENE 365_{TM} and coconut oil, ranging from 88.9 % to 66.7 % INDUSTRENE 365_{TM}, and the balance VICTORY 76 _{TM} were evaluated in terms of their hydrophobizing/hydration-delaying capability. On the basis of this investigation, it was determined that the most efficacious composition of the final agent blend should be:
1. 73 % INDUSTRENE 365_{TM}.
and 2. 27 % VICTORY 76_{TM}.
The desired characteristic of the hydrophobizing agent is that it virtually inhibit the lime hydration until the lime is mechanically blended with a contaminated soil or other granular material with the aid of vigorous stirring then allowed to remain undisturbed, at which time the reaction should occur at a high rate as indicated by a rapid and extensive rise in temperature. This behaviour is seen to be optimum when the concentration of the hydrophobizing agent in the treated lime is within the range of 0.5 % and 2.5 %, with the optimum performance noted at approximately 1.0 %. It is possible that other blends of oil and fatty acids would perform equally well. For example, blends of liquid fatty acids with babassu oil or with palm kernel oil may be useful.

Moreover, a number of solid and liquid fatty acid agents have been tested and were found to be considerably less satisfactory. Included amongst the liquids examined were the following, identified by their trademarks:
1. Shell ROTELLA 10W_{TM};
2. Shell VITRE A_{TM};
3. Esso HDX_{TM}10W;
4. Mineral Oil;
and 5. INDUSTRENE 106_{TM};
The solid additives examined were the following:
1. Calcium Stearate;
2. Rubber Grade Stearic Acid;
3. Single Pressed Stearic Acid;
4. Neutral 60 (60 % to 100 % Stearic Acid);
5. Tallow;
6. Cottonseed Oil;
7. Soybean Oil;
8. INDUSTRENE B_{TM};
and 9. INDUSTRENE 143_{TM}.
In virtually all cases the blended product was not a clear, stable readily-atomizable liquid at room temperatures. One combination, INDUSTRENE 106_{TM} plus coconut oil, though a quite atomizable liquid, did not provide as effective a lime-treating agent as did the blend of the present invention.

### Example 2 - Production of the Conditioned Lime

The hydrophobizing agent of Example 1 was fed to a spray nozzle where the pressure gradient across the spray nozzle is from 520 mmHg to 1560 mmHg. From that spray nozzle, the hydrophobizing agent is sprayed into a rising air stream, at an inflow within the range of 910 m/min. to 1820 m/min., the rising air stream carrying finely divided line particles having a size of from 3.5 mesh/lineal cm with 2.0 mm sieve openings to sub-micron size, preferably from 40 mesh/lineal cm with 0.15 mm sieve openings, to sub-micron size. The product produced is a conditioned lime in which the hydrophobizing agent is uniformly coated on the surface of the finely divided lime particles.

The hydrophobizing or conditioning agent of the present invention also acts as an activator/initiator in a method for rendering waste substances harmless.

In one novel method of the present invention, at some point during the lime hydration reaction, the conditioning agent begins to react with the lime. Coupled with the destruction of the lime is the release of sufficient heat to raise the temperature of the mass significantly above 100°C, the boiling point of water. Temperatures in excess of 150°C may even be achieved. At this temperature, hydration, which clearly involves water as a reactant, must soon cease and hydrolysis of the agent takles place. In mixtures of fatty-acid-activated lime and hydrocarbon contaminated soil, temperatures in excess of 400°C have been observed. This behaviour of the agent as an activator/initiator contributes to the chemical destruction of the hydrocarbon contaminants originally present in the waste soil and is an important mechanism in the operation of the above-described novel method.

## Claims

1. A method for rendering harmless a hydrocarbon-contaminated soil by chemical hydrolysis and/or oxidation of said hydrocarbons on said hydrocarbon-contaminated soil, said method comprising
(I) providing a conditioned lime comprising
A) finely-ground lime from about minus 10 mesh to sub-micro size on which is uniformly-coated on the surface thereof;
B) a hydrophobizing or conditioning agent comprising a clear readily-atomizable blend which is liquid at room temperature of
a) a mixture of liquid fatty acids having from 6 to 12 carbon atoms, and
b) a mixture of glycerides of fatty acids having from 8 to 18 carbon atoms;
where the amount of B) is sufficient to fully and uniformly coat the finely-ground lime.
(II) intimately blending said conditioned lime in a ratio of from about 1:6 to about 1:1 with said hydrocarbon-contaminated soil, under conditions of high shear, the degree of blending providing a degree of dispersion at least near microscopic level in an apparatus capable of imparting sufficient shear and mixing action;
(III) conveying a charge of said blended conditioned lime/soil to an enclosed reaction vessel and carrying out hydration of said lime in said blended conditioned lime/soil charge, whereby said blended lime/soil charge being retained in said reaction vessel for a time of about 10 to about 45 minutes;
(IV) retaining the heat of said hydration reaction within said vessel, whereby hydrolysis of said fatty acid conditioner and/or hydrocarbon contaminants in the soil is initiated;
(V) substantially simultaneously introducing air or oxygen-enriched air into said reaction vessel together with steam and/or water wherein the direction of flow of said introduced air is co-current to the direction of flow of said solid charge through said reaction vessel thereby to effect a flameless intermediate-temperature oxidation of said hydrocarbons or of their hydrolysed degradation products;
(VI) discharging decontaminated soil product from said reaction vessel by passing said soil product, in dry, dusty, hydrophobic form through a treating zone where it is sprayed with a surfactant, i.e. commercial or industrial soaps or detergents at a concentration ranging from 30% to 80% by weight;
(VII) passing said surfactant-treated solid to a blender or a pug mill, where it is mixed with sufficient water in an amount ranging from 5% to 25% based on the quantity of treated solid, thereby to povide a substantially dust-free product.

2. The method of claim 1 wherein in said conditioned lime used in step (I) thereof said hydrophobizing or conditioning agent comprises a liquid blend of
a) a mixture of said liquid fatty acids comprising a preponderant amount of caprylic acid and capric acid, and
b) a mixture of glycerides of fatty acids comprised in coconut oil, babassu oil or palm kernel oil.

3. The method of claim 1 wherein in said conditioned lime used in step (I) thereof, said hydrophobizing or conditioning agent comprises a liquid blend of
a) a mixture of said liquid fatty acids comprising caproic acid, caprylic acid, capric acid, and lauric acid, and
b) coconut oil, the composition of which comprises the glyceride of lauric acid, with appreciable amounts of the glycerides of capric, myristic, palmitic, and oleic acids.

4. The method of claim 1 wherein in said conditioned lime used in step (I) thereof, said hydrophobizing or conditioning agent comprises a liquid blend of
a) a mixture of said liquid fatty acids comprising 1% caproic acid, 55% caprylic acid, 42% capric acid, and 2% lauric acid and
b) coconut oil, the general composition of fatty acids therein comprising 8.0% caprylic acid, 7.0% capric acid, 48.0% lauric acid, 17.5% myristic acid, 8.2% palmitic acid, 2.0% stearic acid, 6.0% oleic acid, and 2.5% linoleic acid.

5. The method of claim 1 wherein in said conditioned lime used in step (I) thereof said hydrophobizing or conditioning agent comprises a liquid blend of
a) a mixture of said liquid fatty acids
b) coconut oil, the composition of fatty acids therein comprising 47% lauric acid, 19% myristic acid, 9% palmitic acid, 7% oleic acid, <3% stearic acid.

6. The method of claim 1 wherein in said conditioned lime used in step (I) thereof, said hydrophobizing or conditioning agent comprises a liquid blend of
a) a mixture of said liquid fatty acids and
b) babassu oil, the composition of the acids of which comprises caprylic acid, capric acid, lauric acid, myristic acid, palmitic acid, and oleic acid.

7. The method of claim 1 wherein in said conditioned lime used in step (I) thereof, said hydrophobizing or conditioning agent comprising a liquid blend of
a) said mixture of said liquid fatty acids and
b) palm kernel oil, the composition of the acids of which comprises caprylic acid, capric acid, lauric acid, myristic acid, palmitic acid, stearic acid, oleic acid, and linoleic acid.

8. The method of claims 1 - 7 wherein said ratio of a) to b) by weight being 90:10 to 65:35, e. g., 73:27.

9. The method of claim 1 - 8 wherein the amount of said hydrophobizing or conditioning agent is about 0,5 to about 2,5 %, e.g., 1.0% by weight of the composition.

10. A method according to claims 1 - 9 wherein said hydrocarbon-contaminated soil has a maximum grain size less than 5 cm.

11. A method according to claims 1 - 10 wherein said hydrocarbon-contaminated soil is physically-preconditioned moist.

12. A method according to claims 1 - 11 comprising
conveying a charge of said blended conditioned lime/soil to an enclosed reaction vessel and carrying out hydration of said lime in said blended conditioned lime/soil charge wherein said enclosed reaction vessel is subjected to batchwise feeding of said blended lime/soil charge.

13. A method according to claims 1 - 11 comprising
conveying a charge of said blended conditioned lime/soil to an enclosed reaction vessel and carrying out hydration of said lime in said blended conditioned lime/soil charge wherein said enclosed reaction vessel is subjected to continuous feeding of said blended lime/soil charge, whereby said blended lime/soil charge moves continuously slowly through said reaction vessel.

14. A method according to claims 1 - 13 comprising
(IV) substantially simultaneously introducing air or oxygen-enriched air into said reaction vessel together with steam and/or water wherein the direction of flow of said introduced air is from the point of introduction into the reaction vessel to the point of discharge from the reaction vessel thereby to effect a flameless intermediate-temperature oxidation of said hydrocarbons or of their hydrolysed degradation products.

15. A method according to claims 1 - 14 comprising
(V) discharging decontaminated soil product from said reaction vessel by passing said soil product, in dry, dusty, hydrophobic form through a treating zone where it is sprayed with a surfactant, i.e. an aqueous solution of sodium hydroxide wherein the concentration of said sodium hydroxide is from 5% to 10% by weight.

16. A method according to claims 1 - 15 comprising
(IV) substantially simultaneously introducing air or oxygen-enriched air into said reaction vessel together with steam and/or water in an amount required to initiate, sustain and complete said hydrolysis reaction, thereby to effect a flameless intermediate-temperature oxidation of said hydrocarbons or of their hydrolysed degradation products.

17. A system for rendering harmless a hydrocarbon-contaminated soil by chemical hydrolysis and/or oxidation of said hydrocarbons in said hydrocarbon-contaminated soil, comprising
(I) means (12) for finely-dividing said hydrocarbon-contaminated soil;
(II) a storage hopper (16);
(III) means (15) for feeding said finely-divided, hydrocarbon-contaminated soil to said storage hopper (16);
(IV) a blender (20); for blending under conditions of high shear, the degree of blending providing a degree of dispersion at least near micoscopic level;
(V) means (18) for feeding said finely-divided, hydrocarbon-contaminated soil from said storage hopper (16) to said blender (20);
(VI) a storage vessel (21) containing conditioned lime provided according to step (I) claims 1 to 9;
(VII) means (23) for feeding said conditioned lime from said storage vessel (22) containing conditioned lime to said blender (20);
(VIII) an enclosed inclined reaction vessel (48), said reaction vessel (48) including a lower inlet, a bottom air-admitting inlet (30), an upper discharge means (31), and an upper surfactant admitting inlet (32) at said discharge;
(IX) discharge means (28) from said blender (20);
(X) a treating/blending vessel (33) having means for moving a solid charge from an intake end to a discharge end and having an upper water inlet line (34);
(XI) discharge means from said enclosed, inclined reaction vessel (31) for feeding a finely divided decontaminated solid charge directly to the intake of said treating/blending vessel (33) through a spray of surfactant, and
(XII) discharge means from said treating/blending vessel (33) for discharging moistened decontaminated soil from said treating/blending vessel (33) directly to said central intake (37) of said discharge tower (38).

18. A system according to claim 17 comprising
(I) a jaw crusher or a roll crusher for finely-dividing said hydrocarbon contaminated soil;
(V) a screw conveyor within said storage hopper and an upwardly inclined belt conveyor leading from said storage hopper for feeding finely-divided, hydrocarbon contaminated soil from said storage hopper to said blender;
(VIII) an enclosed inclined reaction vessel, said reaction vessel including a lower inlet, a bottom air-admitting line, an upper discharge means in form of an inclined screw conveyor, within said reaction vessel for moving a solid material charge from said inlet to said discharge, and an upper surfactant admitting line at said discharge;
(IX) discharge means from said blender in form of a rotating blade blender/screw conveyor, for feeding a charge of blended conditioned lime/soil directly to said reaction vessel;
(X) a treating/blending vessel in form of a pug mill including a rotating blade blender/screw conveyor, having means for moving a solid charge from an intake end to a discharge end and having an upper water inlet line, and
(XII) discharge means from said treating/blending vessel for discharging moistened decontaminated soil from said treating/blending vessel directly to said central intake of said discharge tower wherein said discharge tower includes a fan for discharge of excess air to an emissions cleanup system and to maintain a negative pressure therein.

## Patentansprüche

1. Verfahren zur Überführung mit Kohlenwasserstoffen kontaminierten Bodens durch chemische Hydrolyse und/oder Oxidation der genannten Kohlenwasserstoffe in dem genannten, mit Kohlenwasserstoffen kontaminiertem Boden, in einen gefahrlosen Zustand, wobei das genannte Verfahren umfaßt:
(I) Bereitstellen konditionierten Kalks enthaltend
A) feingemahlenen Kalk mit einer Größe von weniger als 10 mesh bis zur Submikrogröße, auf welchen auf dessen Oberfläche gleichmäßig beschichtet ist;
B) ein hydrophobisierendes oder konditionierendes Mittel, enthaltend eine klare, nahezu atomisierbare Mischung, welche bei Raumtemperatur flüssig ist, aus
a) einer Mischung von flüssigen Fettsäuren mit 6 bis 12 Kohlenstoffatomen und
b) einer Mischung von Glyceriden mit Fettsäuren, welche 8 bis 18 Kohlenstoffatome haben;
wobei die Menge von B) ausreichend ist, um den feingemahlenen Kalk vollständig und gleichförmig zu überziehen,
(II) intensives Mischen des genannten konditionierten Kalks mit dem genannten, mit Kohlenwasserstoffen kontaminierten Boden, in einem Verhältnis von etwa 1:6 bis etwa 1:1 unter starkem Abscheren, wobei der Grad der Mischung einen Grad an Dispersion wenigstens nahe dem mikroskopischen Bereich hervorruft, in einer Vorrichtung, welche geeignet ist, ausreichende Scherkräfte und Mischwirkung zu erzeugen;
(III) Fördern der Charge des genannten gemischten, konditionierten Kalk/Boden-Gemisches in einen angeschlossenen Reaktionsbehälter und Durchführung des Abbindens des genannten Kalks in der genannten gemischten, konditionierten Kalk/Boden-Charge, wobei die genannte gemischte Kalk/Boden-Charge im genannten Reaktionsbehälter für einen Zeitraum von etwa 10 bis etwa 45 Minuten gehalten wird;
(IV) Aufrechterhalten der Wärme der genannten Abbindereaktion innerhalb des genannten Behälters, wodurch die Hydrolyse des genannten Fettsäure-Konditionierungsmittels und/oder Kohlenwasserstoff-Verunreinigungen im Boden initiiert wird;
(V) im wesentlichen gleichzeitiges Hinzufügen von Luft oder mit Sauerstoff angereicherter Luft in den genannten Reaktionsbehälter zusammen mit Dampf und/oder Wasser, wobei die Fließrichtung der genannten hinzugefügten Luft in dem genannten Behälter im Gleichstrom mit der Fließrichtung der genannten Feststoffcharge verläuft, wodurch eine flammenlose Zwischentemperaturoxidation der genannten Kohlenwasserstoffe oder deren hydrolysierten Abbauprodukte bewirkt wird;
(VI) Austragen des dekontaminierten Bodenprodukts aus dem genannten Reaktionsbehälter unter Hindurchführen des genannten Bodenproduktes in einer trockenen, staubigen, hydrophoben Form durch eine Behandlungszone, wo es mit einem oberflächenaktiven Mittel, beispielsweise kommerzieller oder industrieller Seifen oder Detergentien, in einer Konzentration zwischen etwa 30 Gew% bis 80 Gew% besprüht wird;
(VII) Überführen des genannten mit oberflächenaktiven Substanzen behandelten Feststoffes in einen Mischer oder Tonkneter, worin dieser mit einer ausreichenden Menge Wasser in einem Bereich von 5 % bis 25 %, bezogen auf die Menge des zu behandelnden Feststoffes, gemischt wird und dadurch ein im wesentlichen staubfreies Produkt zu liefern.

2. Verfahren nach Anspruch 1, worin das genannte hydrophobisierende oder konditionierende Mittel des in dessen Stufe (I) verwendeten konditionierten Kalks, eine flüssige Mischung enthält aus:
a) einer Mischung der genannten flüssigen Fettsäuren, enthaltend eine überwiegende Menge von Caprylsäure und Caprinsäure, und
b) einer Mischung von Glyceriden von Fettsäuren, enthaltend Kokosnußöl, Babassuöl oder Palmkernöl.

3. Verfahren nach Anspruch 1, worin das genannte hydrophobisierende oder konditionierende Mittel des in dessen Stufe (I) verwendeten konditionierten Kalks, eine flüssige Mischung enthält aus:
a) einer Mischung der genannten flüssigen Fettsäuren, enthaltend Capronsäure, Caprylsäure, Caprinsäure und Laurinsäure, und
b) Kokosnußöl, dessen Zusammensetzung die Glyceride von Laurinsäure mit nennenswerten Mengen der Glyceride von Caprin-, Myristin-, Palmitin- und Oleinsäure enthält.

4. Verfahren nach Anspruch 1, worin das genannte hydrophobisierende oder konditionierende Mittel des in dessen Stufe (I) verwendeten konditionierten Kalks, eine flüssige Mischung enthält aus:
a) einer Mischung der genannten flüssigen Fettsäuren, enthaltend 1 % Capronsäure, 55 % Caprylsäure, 42 % Caprinsäure und 2 % Laurinsäure, und
b) Kokosnußöl, dessen allgemeine Zusammensetzung an Fettsäuren 8,0 % Caprylsäure, 7,0 % Caprinsäure, 48,0 % Laurinsäure, 17,5 % Myristinsäure, 8,2 % Palmitinsäure, 2,0 % Stearinsäure, 6,0 % Oleinsäure und 2,5 % Linolsäure enthält.

5. Verfahren nach Anspruch 1, worin das genannte hydrophobisierende oder konditionierende Mittel des in dessen Stufe (I) verwendeten konditionierten Kalks, eine flüssige Mischung enthält aus:
a) einer Mischung der genannten flüssigen und
b) Kokosnußöl, dessen Zusammensetzung an Fettsäuren 47,0 % Laurinsäure, 19 % Myristinsäure, 9 % Palmitinsäure, 7 % Oleinsäure und < 3 % Stearinsäure enthält.

6. Verfahren nach Anspruch 1, worin das genannte hydrophobisierende oder konditionierende Mittel des in dessen Stufe (I) verwendeten konditionierten Kalks, eine flüssige Mischung enthält aus:
a) einer Mischung der genannten flüssigen Fettsäuren und
b) Babassuöl, dessen Zusammensetzung an Säuren Caprylsäure, Caprinsäure, Laurinsäure, Myristinsäure, Palmitinsäure und Oleinsäure enthält.

7. Verfahren nach Anspruch 1, worin das genannte hydrophobisierende oder konditionierende Mittel des in dessen Stufe (I) verwendeten konditionierten Kalks, eine flüssige Mischung enthält aus:
a) einer Mischung der genannten flüssigen Fettsäuren und
b) Palmkernöl, dessen Zusammensetzung an Säuren Caprylsäure, Caprinsäure, Laurinsäure, Myristinsäure, Palmitinsäure, Stearinsäure, Oleinsäure und Linolsäure enthält.

8. Verfahren nach den Ansprüchen 1-7, worin das genannte Verhältnis von a) zu b) bezogen auf das Gewicht 90:10 bis 65:35, beispielsweise 73:27 beträgt.

9. Verfahren nach den Ansprüchen 1-8, worin die Menge des genannten hydrophobisierenden oder konditioniernden Mittels etwa 0,5 bis etwa 2,5 Gew%, beispielsweise 1,0 Gew% beträgt.

10. Verfahren nach den Ansprüchen 1-9, worin der genannte mit Kohlenwasserstoffen kontaminierte Boden eine maximale Korngröße kleiner als 5 cm hat.

11. Verfahren nach den Ansprüchen 1-10, worin der genannte mit Kohlenwasserstoffen kontaminierte Boden physikalisch feucht vorkonditioniert ist.

12. Verfahren nach den Ansprüchen 1-11, umfassend das Fördern einer Charge des genannten gemischten, konditionierten Kalk/Boden-Gemisches in einen angeschlossenen Reaktionsbehälter und Durchführung des Abbindens des genannten Kalks in der genannten gemischten, konditionierten Kalk/Boden-Charge, worin der genannte Reaktionsbehälter einer losweisen Einspeisung mit der genannten gemischten, konditionierten Kalk/Boden-Charge unterworfen wird.

13. Verfahren nach den Ansprüchen 1-11, umfassend das Fördern einer Charge des genannten gemischten, konditionierten Kalk/Boden-Gemisches in einen angeschlossenen Reaktionsbehälter und Durchführung des Abbindens des genannten Kalks in der genannten gemischten, konditionierten Kalk/Boden-Charge, worin der genannte Reaktionsbehälter einer kontinuierlichen Einspeisung mit der genannten gemischten, konditionierten Kalk/Boden-Charge unterworfen wird, wobei die genannte gemischte, konditionierte Kalk/Boden-Charge sich kontinuierlich langsam durch den genannten Reaktionsbehälter bewegt.

14. Verfahren nach den Ansprüchen 1-13, umfassend (IV) im wesentlichen gleichzeitiges Hinzufügen von Luft oder mit Sauerstoff angereicherter Luft in den genannten Reaktionsbehälter zusammen mit Dampf und/oder Wasser, wobei die Fließrichtung der genannten hinzugefügten Luft vom Einlaßpunkt in den Reaktionsbehälter zu dem Auslaßpunkt aus dem Reaktionsbehälter verläuft, wodurch eine flammenlose Zwischentemperaturoxidation der genannten Kohlenwasserstoffe oder deren hydrolysierten Abbauprodukte bewirkt wird.

15. Verfahren nach den Ansprüchen 1-14, umfassend (V) Entfernen des dekontaminierten Bodenprodukts unter Hindurchführen des genannten Bodenprodukts in einer trockenen, staubigen, hydrophoben Form durch eine Behandlungszone, wo es mit einem oberflächenaktiven Mittel besprüht wird, beispielsweise mit einer wäßrigen Lösung von Natriumhydroxid, wobei die Konzentration des genannten Natriumhydroxids von 5 Gew% bis 10 Gew% beträgt.

16. Verfahren nach den Ansprüchen 1-15, umfassend (IV) im wesentlichen gleichzeitiges Hinzufügen von Luft oder mit Sauerstoff angereicherter Luft in den genannten Reaktionsbehälter zusammen mit Dampf und/oder Wasser in einer Menge, welche erforderlich ist, um die genannte Hydrolysereaktion zu starten, zu unterhalten und zu vervollständigen, wodurch eine flammenlose Zwischentemperaturoxidation der genannten Kohlenwasserstoffe oder deren hydrolysierten Abbauprodukte bewirkt wird.

17. Vorrichtung zur Überführung mit Kohlenwasserstoffen kontaminierten Bodens durch chemische Hydrolyse und/oder Oxidation der genannten Kohlenwasserstoffe in dem genannten mit Kohlenwasserstoffen kontaminiertem Boden in einen gefahrlosen Zustand, umfassend
(I) Vorrichtung (12) zur Feinzerteilung des genannten mit Kohlenwasserstoffen kontaminierten Bodens;
(II) einen Lagerbunker (16);
(III) Vorrichtung (15) zur Förderung des genannten feinzerteilten mit Kohlenwasserstoffen kontaminierten Bodens in den genannten Lagerbunker (16);
(IV) einen Mischer (20); zum Mischen unter starkem Abscheren, wobei der Grad der Mischung einen Grad an Dispersion wenigstens nahe dem mikroskopischen Bereich hervorruft;
(V) Vorrichtung (18) zur Förderung des genannten feinzerteilten mit Kohlenwasserstoffen kontaminierten Bodens aus dem genannten Lagerbunker (16) in den genannten Mischer (20);
(VI) einen Lagerbehälter (21), enthaltend konditionierten Kalk, erhalten nach Stufe (I) der Ansprüche 1 bis 9;
(VII) Vorrichtung (23) zur Förderung des genannten konditionierten Kalks aus dem Lagerbehälter (22) in den genannten Mischer (20);
(VIII) einen angeschlossenen, aufsteigenden Reaktionsbehälter (48) mit einem unteren Einlaß, einem Bodenlufteinlaß (30), einer oberen Austragvorrichtung (31) und einem oberen Einlaß für oberflächenaktive Mittel (32) am genannten Austrag;
(IX) Austragvorrichtung (28) aus dem genannten Mischer (20);
(X) ein Behandlungs/Misch-Behälter (33) mit einer Vorrichtung zum Bewegen einer festen Charge von einem Einlaßende zu einem Austragende mit einer oberen Wasseranschlußleitung (34);
(XI) Austragvorrichtung aus dem genannten angeschlossenen, aufsteigenden Reaktionsbehälter (31)zur Aufgabe einer fein zerteilten dekontaminierten Feststoffcharge direkt in den Einlaß des genannten Behandlungs/Misch-Behälters (33) durch einen Nebel von oberflächenaktivem Mittel hindurch und
(XII) Austragvorrichtung aus dem genannten Behandlungs/Misch-Behälter (33) zum Austragen des angefeuchteten dekontaminierten Bodens aus dem genannten Behandlungs/Misch-Behälter (33) direkt in die genannten zentrale Ansaugöffnung des genannten Auslaßturms (38).

18. Vorrichtung gemäß Anspruch 17, umfassend
(I) einen Backenbrecher oder einen Walzenbrecher zur Feinzerteilung des genannten mit Kohlenwasserstoffen kontaminierten Bodens;
(V) einen Schraubenförderer innerhalb des genannten Lagerbunkers und einen aufwärtsgeneigten Bandförderer aus dem genannten Lagerbunker zur Förderung des feinzerteilten, mit Kohlenwasserstoffen kontaminierten Bodens aus dem genannten Lagerbunker in den genannten Mischer;
(VIII) einen angeschlossenen, aufsteigenden Reaktionsbehälter, genannter Reaktionsbehälter enthält einen unteren Einlaß, eine Bodenlufteinlaßleitung, eine obere Austragvorrichtung in Form eines aufsteigenden Schraubenförderer, innerhalb des genannten Reaktionsbehälters zur Bewegung einer festen Stoffcharge vom genannten Einlaß zum genannten Austrag, und eine obere Einlaßleitung für oberflächenaktiven Mittel am genannten Austrag;
(IX) Austragvorrichtung aus genanntem Mischer in Form eines Drehschaufelmischers/Schneckenförderers, zur Förderung einer Charge gemischten, konditionierten Kalk/Boden-Gemisches direkt in den genannten Reaktionsbehälter;
(X) ein Behandlungs/Misch-Behälter in Form eines Tonkneters, enthaltend einen Drehschaufelmischer/Schneckenförderer, welcher Vorrichtungen zur Bewegung einer festen Charge von einem Einlaß zu einem Austrag aufweist, und eine obere Wasseranschlußleitung hat, und
(XII) eine Austragvorrichtung aus dem genannten Behandlungs/Misch-Behälter zum Austragen des angefeuchteten, dekontaminierten Bodens aus dem genannten Behandlungs/Misch-Behälter direkt in die genannte zentrale Auslaßöffnung des genannten Auslaßturms, wobei der genannte Auslaßturm einen Ventilator zum Abführen überschüssiger Luft zu einem Luftreinigungssystem und zum Erhalt eines negativen Drucks innerhalb des System aufweist.

## Revendications

1. Procédé pour rendre inoffensive de la terre contaminée par hydrocarbures, par hydrolyse et/ou oxydation chimique de ces hydrocarbures présents sur la terre contaminée par hydrocarbures, selon lequel :
(I) on prépare de la chaux traitée, comprenant :
A) de la chaux finement conditionnée selon une taille d'environ moins de 10 meshs à une taille submicrométrique sur la surface de laquelle est uniformément déposé :
B) un agent de conditionnement ou d'hydrophobie, comprenant un mélange limpide facilement atomisable qui est liquide à la température ambiante, comprenant :
a) un mélange d'acides gras liquides comportant de 6 à 12 atomes de carbone, et
b) un mélange de glycérides d'acides gras comportant de 8 à 18 atomes de carbone ;
la quantité du composant B) étant suffisante pour revêtir complètement et uniformément la chaux finement broyée ;
(II) on mélange intimement cette chaux traitée selon un rapport d'environ 1:6 à environ 1:1 avec la terre contaminée par hydrocarbures, dans des conditions à fort cisaillement, le degré de mélange procurant un degré de dispersion au moins voisin d'un niveau microscopique dans un appareil capable de conférer une action de cisaillement et de mélange suffisante ;
(III) on transporte une charge de cette composition de chaux conditionnée et de terre mélangées, dans un récipient de réaction fermé, et on effectue une hydratation de la chaux présente dans cette charge de chaux conditionnée et de terres mélangées, de telle façon que la charge de chaux et de terre mélangées soit retenue dans le récipient de réaction pendant environ 10 à environ 45 minutes ;
(IV) on conserve la chaleur de la réaction d'hydratation dans le récipient, de sorte que l'hydrolyse de l'agent de conditionnement à base d'acide gras et/ou des impuretés hydrocarbonées présentes dans la terre, est initiée ;
(V) on introduit à peu près simultanément de l'air ou de l'air enrichi en oxygène dans le récipient de réaction, en association avec de la vapeur d'eau et/ou de l'eau, la direction d'écoulement de l'air introduit étant à co-courant par rapport à la direction d'écoulement de la charge solide à travers le récipient de réaction, de façon à effectuer une oxydation sans flamme à température intermédiaire des hydrocarbures ou de leurs produits de dégradation hydrolysés ;
(VI) on évacue un produit de terre décontaminée du récipient de réaction en faisant passer ce produit de terre, sous forme sèche, pulvérulente et hydrophobe, à travers une zone de traitement dans laquelle il est pulvérisé avec un tensioactif, c'est-à-dire des savons ou des détergents commerciaux ou industriels, selon une concentration de 30 % à 80 % en poids ;
(VII) on fait passer ce solide traité par tensioactif, dans un mélangeur ou un broyeur à mortier dans lequel il est mélangé avec suffisamment d'eau selon une quantité de 5 % à 25 % par rapport à la quantité de solides traités, de façon à obtenir un produit sensiblement exempt de poudre.

2. Procédé selon la revendication 1, dans lequel, dans la chaux conditionnée et employée dans l'étape (I), l'agent d'hydrophobie ou de conditionnement comprend un mélange liquide :
a) d'un mélange desdits acides gras liquides comprenant une quantité prépondérante d'acide caprylique et d'acide caprique, et
b) d'un mélange de glycérides d'acides gras comprenant de l'huile de coprah, de l'huile d'attalée ou de l'huile de palmiste.

3. Procédé selon la revendication 1, dans lequel, dans la chaux conditionnée employée dans l'étape (I), l'agent d'hydrophobie ou de traitement comprend un mélange liquide :
a) d'un mélange desdits acides gras liquides comprenant de l'acide caproïque de l'acide caprylique, de l'acide caprique et de l'acide laurique, et
b) de l'huile de coprah dont la composition comprend le glycéride d'acide laurique avec des quantités notables des glycérides d'acides caprique, myristique, palmitique et oléique.

4. Procédé selon la revendication 1, dans lequel, dans la chaux conditionnée employée dans l'étape (I), l'agent d'hydrophobie ou de traitement comprend un mélange liquide :
a) d'un mélange desdits acides gras liquides comprenant 1 % d'acide caproïque, 55 % d'acide caprylique, 42 % d'acide caprique et 2 % d'acide laurique, et
b) d'huile de coprah dont la composition d'acides gras comprend 8,0 % d'acide caprylique, 7,0 % d'acide caprique, 48,0 % d'acide laurique, 17,5 % d'acide myristique, 8,2 % d'acide palmitique, 2,0 % d'acide stéarique, 6,0 % d'acide oléique et 2,5 % d'acide linoléique.

5. Procédé selon la revendication 1, dans lequel, dans la chaux conditionnée employée dans l'étape (I), l'agent d'hydrophobie ou de traitement comprend un mélange liquide :
a) d'un mélange desdits acides gras liquides,
b) d'huile de coprah dont la composition d'acides gras comprend 47 % d'acide laurique, 19 % d'acide myristique, 9 % d'acide palmitique, 7 % d'acide oléique et moins de 3 % d'acide stéarique.

6. Procédé selon la revendication 1, dans lequel, dans la chaux conditionnée employée dans l'étape (I), l'agent d'hydrophobie ou de traitement comprend un mélange liquide :
a) d'un mélange desdits acides gras liquides, et
b) d'huile d'attalée dont la composition des acides comprend de l'acide caprylique, de l'acide caprique, de l'acide laurique, de l'acide myristique, de l'acide palmitique et de l'acide oléique.

7. Procédé selon la revendication 1, dans lequel, dans la chaux conditionnée employée dans l'étape (I), l'agent d'hydrophobie ou de traitement comprend un mélange liquide :
a) dudit mélange des acides gras liquides, et
b) d'huile de palmiste dont la composition des acides comprend de l'acide caprylique, de l'acide caprique, de l'acide laurique, de l'acide myristique, de l'acide palmitique, de l'acide stéarique, de l'acide oléique et de l'acide linoléique.

8. Procédé selon les revendications 1 à 7, dans lequel le rapport des composants a) et b) est, en poids, de 90:10 à 65:35, par exemple de 73:27.

9. Procédé selon les revendications 1 à 8, dans lequel la quantité de l'agent d'hydrophobie ou de traitement est d'environ 0,5 à environ 2,5 %, par exemple de 1,0 % en poids par rapport à la composition.

10. Procédé selon les revendications 1 à 9, dans lequel la terre contaminée par hydrocarbures, a une taille particulaire maximale inférieure à 5 cm.

11. Procédé selon les revendications 1 à 10, dans lequel la terre contaminée par hydrocarbures, est humidifiée par préconditionnement physique.

12. Procédé selon les revendications 1 à 11, comprenant le transport d'une charge de la chaux conditionnée et de la terre mélangées, dans un récipient de réaction fermé, et l'hydratation de la chaux présente dans la charge de chaux conditionnée ou de terre mélangées, le récipient de réaction fermé étant soumis à une alimentation discontinue en la charge de chaux et de terre mélangées.

13. Procédé selon les revendications 1 à 11, comprenant le transport d'une charge de la chaux traitée et de terre mélangées, dans un récipient de réaction fermé, et d'hydratation de la chaux présente dans la charge de chaux conditionnée et de terre mélangées, le récipient de réaction fermé étant soumis à une alimentation continue en ladite charge de chaux et de terre mélangées, de sorte que la charge de chaux et de terre mélangées se déplace lentement de manière continue dans le récipient de réaction.

14. Procédé selon les revendications 1 à 13, comprenant (IV) l'introduction à peu près simultanée d'air ou d'air enrichi en oxygène dans le récipient de réaction, en association avec de la vapeur d'eau et/ou de l'eau, la direction d'écoulement de l'air introduit allant du point d'introduction dans le récipient de réaction vers le point d'évacuation du récipient de réaction, de façon à effectuer une oxydation sans flamme à température intermédiaire desdits hydrocarbures ou de leurs produits de dégradation hydrolysés.

15. Procédé selon les revendications 1 à 14, comprenant (V) l'évacuation du produit de terre décontaminé issu du récipient de réaction, en faisant passer ce produit de terre, sous forme sèche, pulvérulente et hydrophobe à travers une zone de traitement dans laquelle il est pulvérisé avec un tensioactif, c'est-à-dire une solution aqueuse d'hydroxyde de sodium dans laquelle la concentration en hydroxyde de sodium est de 5 % à 10 % en poids.

16. Procédé selon les revendications 1 à 15, comprenant (IV) l'introduction à peu près simultanée d'air ou d'air enrichi en oxygène dans le récipient de réaction en association avec de la vapeur d'eau et/ou de l'eau selon une quantité nécessaire pour initier, prolonger et achever la réaction d'hydrolyse, de façon à effectuer une oxydation sans flamme à température intermédiaire des hydrocarbures ou de leurs produits de dégradation hydrolysés.

17. Système pour rendre inoffensive une terre contaminée par hydrocarbures, par hydrolyse chimique et/ou oxydation des hydrocarbures présents dans la terre contaminée par hydrocarbures, comprenant :
(I) des moyens (12) pour diviser finement la terre contaminée par hydrocarbures ;
(II) une trémie de stockage (16) ;
(III) des moyens (15) pour alimenter en la terre contaminée par hydrocarbures finement divisée, la trémie de stockage (16) ;
(IV) un mélangeur (20) pour mélanger dans des conditions de cisaillement fort, le degré de mélange procurant un degré de dispersion au moins voisin d'un niveau microscopique ;
(V) des moyens (18) pour alimenter le mélangeur (20), en la terre contaminée par hydrocarbures finement divisée issue de la trémie de stockage (16) ;
(VI) un récipient de stockage (21) contenant de la chaux conditionnée obtenue selon l'étape (I) des revendications 1 à 9 ;
(VII) des moyens (23) pour alimenter le mélangeur (20) en la chaux traitée issue du récipient de stockage (22) contenant de la chaux traitée ;
(VIII) un récipient de réaction fermé et incliné (48), ce récipient de réaction (48) comprenant un orifice d'entrée inférieur, un orifice d'entrée d'air extérieur, des moyens d'évacuation supérieurs (31), et un orifice d'entrée de tensioactif supérieur (32) au niveau des moyens d'évacuation ;
(IX) des moyens d'évacuation (28) du mélangeur (20) ;
(X) un récipient de traitement et de mélange (33) comportant des moyens de déplacement d'une charge solide à partir d'une extrémité d'entrée vers une extrémité d'évacuation et comportant une conduite d'introduction d'eau supérieure (34) ;
(XL) des moyens d'évacuation du récipient de réaction fermé et incliné (31) pour introduire un solide contaminé et finement divisé, directement à l'entrée du récipient de traitement et de mélange (33), avec une pulvérisation intermédiaire de tensioactif, et
(XII) des moyens d'évacuation du récipient de traitement et de mélange (33) pour évacuer de la terre décontaminée et humidifiée du récipient de traitement et de mélange (33), directement à une entrée centrale (37) d'une tour d'évacuation (38).

18. Système selon la revendication 17, comprenant :
(I) un concasseur à mâchoires ou un broyeur à cylindres pour diviser finement la terre contaminée par hydrocarbures ;
(V) un transporteur à vis situé à l'intérieur de la trémie de stockage, et un transporteur à bande incliné vers le haut, s'étendant à partir de la trémie de stockage, pour alimenter le mélangeur en terre contaminée par hydrocarbures et finement divisée à partir de la trémie de stockage ;
(VIII) un récipient de réaction fermé et incliné, le récipient de réaction comprenant un orifice d'entrée inférieur, une conduite d'entrée d'air inférieure, des moyens d'évacuation supérieurs sous forme d'un transporteur à vis incliné, à l'intérieur du récipient de réaction afin de déplacer une charge de matière solide à partir de l'orifice d'entrée jusqu'aux moyens d'évacuation, et une conduite d'introduction de tensioactif supérieure disposée à la sortie ;
(IX) des moyens d'évacuation à partir du mélangeur, sous forme d'un transporteur à vis/mélangeur à pale rotative, pour alimenter directement le récipient de réaction en une charge de chaux conditionnée et de terres mélangées ;
(X) un récipient de traitement et de mélange sous forme d'un broyeur à mortier comprenant un transporteur à vis/mélangeur à pale rotative, comportant des moyens pour déplacer une charge solide à partir d'un orifice d'entrée jusqu'à une extrémité d'évacuation et comportant une conduite d'entrée d'eau supérieure, et
(XII) des moyens d'évacuation du récipient de traitement et de mélange pour évacuer de la terre décontaminée et humidifiée de ce récipient de traitement et de mélange, directement à l'entrée centrale de la tour d'évacuation, la tour d'évacuation comprenant un ventilateur pour évacuer un excès d'air dans un système de nettoyage d'émissions et pour y maintenir une pression négative.
